# EUROPÄISCHE PATENTSCHRIFT

(11) **EP 1 083 357 B1**
(45) Veröffentlichungstag und Bekanntmachung des Hinweises auf die Patenterteilung: **26.07.2006**
(21) Anmeldenummer: 00119541.1
(22) Anmeldetag: 07.09.2000
(51) Int. Cl.: F16D 23/12, F16D 25/12

(54) **Ausrückevorrichtung, insbesondere für eine Kupplung**
Actuating device, in particular for a clutch
Dispositif de manoeuvre, en particulier pour un embrayage

(30) Priorität: 10.09.1999 DE 19943339
(43) Veröffentlichungstag der Anmeldung: 14.03.2001
(73) Patentinhaber: Rohs-Voigt Patentverwertungsgesellschaft mbH, 52351 Düren (DE)
(72) Erfinder: Rohs, Ulrich, Dr.-Ing., 52351 Düren (DE); Heidingsfeld, Dietmar, Dipl.-Ing., 52078 Aachen (DE)
(74) Vertreter: Castell, Klaus

(56) Entgegenhaltungen:
- EP-A- 0 881 134
- DE-A- 3 327 057
- DE-A- 3 806 642
- US-A- 5 809 830

## Beschreibung

Vorliegende Erfindung betrifft eine Ausrückevorrichtung, insbesondere für eine Kupplung. Derartige Ausrückevorrichtungen werden in vielfältiger Weise in die Antriebsstränge verschiedenster Baugruppen, die eine Ausrückebewegung vornehmen sollen, eingebracht. Insbesondere werden derartige Ausrückevorrichtungen als Kraftwandler genutzt, um beispielsweise eine manuell aufgebrachte Kraft oder eine in eine bestimmte Richtung aufgebrachte Kraft in eine mechanisch in gewisser Weise gerichtete Kraft umzuwandeln. Derartige Ausrückevorrichtungen dienen insbesondere einem Ausrücken von Kupplungen, insbesondere von Fahrzeugkupplungen.

Eine derartige Ausrückevorrichtung ist beispielsweise aus der DE 38 06 642 A1 bekannt. Diese Ausrückevorrichtung weist einen Energiespeicher auf, der beim Ausrücken Energie abgibt und bei einem gegenläufigen Vorgang Energie speichert. Auf diese Weise werden die für ein Ausrücken notwendigen Kräfte reduziert. Eine derartige Ausrückevorrichtung eignet sich insbesondere für mechanische Einrichtungen, die nur gegen verhältnismäßig große Rückstellkräfte ausgerückt werden können.

Als Energiespeicher für diese bekannte Ausrückevorrichtung dienen zwei senkrecht zu einem Ausrückekolben angeordnete Federn, die mit einem als Kraftkoppler dienenden Wälzlager, welches entlang einer im Wesentlichen konischen Kurvenbahn an dem Ausrückekolben geführt ist, mit dem Ausrückekolben wechselwirken. In Abhängigkeit vom Verschleiß, kann eine Baugruppe, welche die Kurvenbahn trägt, entlang des Ausrückekolbens verschoben werden. Hierdurch kann einem Kupplungsverschleiß bzw. ähnlichen, über lange Zeiträume auftretenden Verschiebebewegungen Rechnung getragen werden. Das Verschieben dieser Baugruppe erfolgt hierbei proportional zum Weg des Ausrückekolbens.

Aus der DE 33 27 057 A ist eine der vorstehend beschriebenen Ausrückevorrichtung entsprechende Ausrückevorrichtung bekannt, wobei bei beiden Anordnungen, wobei jeweils der veränderliche Winkel, mit welchem der Energiespeicher auf einem konusförmigen Stempel wirkt, als variable Wirkfläche bezeichnet werden kann.

Es ist Aufgabe vorliegender Erfindung, eine Ausrückevorrichtung, insbesondere für eine Kupplung, mit einem Energiespeicher, der beim Ausrücken Energie abgibt und bei einem gegenläufigen Vorgang Energie speichert, und mit Mitteln zur Erhöhung der Energie im Energiespeicher im Energiespeicher in Abhängigkeit von einer in der Ausrückevorrichtung auftretenden Kraft, die einen hydraulisch oder pneumatisch betätigbaren Stempel mit variabler Wirkfläche umfassen, bereitzustellen, bei welchem die Energiespeicherung auf konstruktiv verhältnismäßig einfache Weise verschiedensten Umständen angepasst werden kann.

Als Lösung schlägt die Erfindung eine gattungsgemäße Ausrückevorrichtung vor, bei welcher der Stempel gegen eine Führungsfläche abgedichtet ist, deren Oberfläche eine vom Stempel wegweisende bzw. auf diesen hinweisende Richtungskomponente aufweist, wobei durch die Dichtung bedingt die Größe der Wirkfläche variabel ist.

Durch eine derartige Anordnung kann durch Variieren der Wirkfläche in Abhängigkeit von dem Ausrückeweg des Stempels ohne Weiteres die Kennlinie, mit welcher als Folge der in der Ausrückevorrichtung auftretenden Kraft der Stempel die Energie in dem Energiespeicher erhöht, gegebenen Erfordernissen angepasst werden. Versuche, eine derartige Kennlinie durch Tellerfedern, Federpakete bzw. Einzelfedern in gewünschter Weise anzupassen, erweisen sich der erfindungsgemäßen Lösung gegenüber als wesentlich schwerer abstimmbar als verhältnismäßig labil in ihrem Aufbau bzw. als verhältnismäßig groß in ihrem Bauvolumen.

Die Energieerhöhung kann verhältnismäßig unmittelbar von der in der Ausrückevorrichtung auftretenden Kraft abhängig gemacht werden, wenn der Stempel durch eine Ausrückehydraulik oder -pneumatik, die durch die Ausrückevorrichtung angeregt wird, betätigbar ist. Bei einer derartigen Anordnung bedingt eine Druckänderung in der Hydraulik bzw. Pneumatik unmittelbar eine Wirkung auf den Stempel. Diese Anordnung erweist sich insbesondere für den Kupplungsbereich als vorteilhaft, in welchem regelmäßig zwischen Ausrückevorrichtung und Kupplung hydraulische bzw. pneumatische Systeme Anwendung finden. Insbesondere resultiert ein Kupplungsverschleiß in einer Druckerhöhung in dem hydraulischen bzw. pneumatischen System, woraus eine Wirkung auf den Stempel und somit eine Energieerhöhung in dem Energiespeicher resultiert.

In konkreter Umsetzung der Erfindung, ist der Stempel gegen eine Führungsfläche abgedichtet, deren Oberfläche eine vom Stempel wegweisende bzw. auf diesen hinweisende Richtungskomponente aufweist. Bei einer derartigen Anordnung folgt, durch die Dichtung bedingt, eine variable Wirkfläche. Hierbei ändert sich die Größe der Wirkfläche in Abhängigkeit von der vom Stempel wegweisenden bzw. auf diesen hinweisenden Richtungskomponente der Führungsfläche. Vorzugsweise, ist je nach Position des Stempel entlang seines Weges somit die Führungsfläche näher am Stempel bzw. weiter von diesem entfernt. Bedingt durch die Dichtung wirkt somit der hydraulische bzw. pneumatische Druck auf eine größere oder aber kleinere Fläche. Hierdurch resultiert dann eine entsprechend höhere bzw. niedrigere Gesamtkraft, die auf den Stempel wirkt.

Insbesondere ist es möglich, den Stempel in einem Raum zu führen, dessen Querschnitt entlang des Stempelweges variiert. Insbesondere ist es vorteilhaft, wenn die Querschnittsvariation symmetrisch bezüglich einer Symmetrieachse des Stempel erfolgt, so dass dieser möglichst gleichförmig belastet wird.

Der Stempel kann in einem Ringspalt angeordnet sein, dessen radial innenliegende Wandung und/oder dessen radial außenliegende Wandung entlang des Stempelweges variiert. Bei einer derartigen Anordnung ist auch der Stempel entsprechend ringförmig ausgebildet. Dieses hat insbesondere bei im Wesentlichen linearen Ausrückevorrichtungen, wie beispielsweise bei einem Hydraulik- oder Pneumatikausrückekolben, den Vorteil einer besonders kompakten Bauweise. Variiert nunmehr die Wandung entlang des Stempelweges, so folgt unmittelbar eine Variation der Breite des Ringspaltes entlang des Stempelweges, die in einer entsprechenden Variation der Wirkfläche resultiert.

Insbesondere kann es vorteilhaft sein, sowohl die radial innenliegende Wandung als auch die radial außenliegende Wandung entlang des Stempelweges zu variieren. Diese Variation kann derart gewählt sein, dass sich die Wirkfläche des Stempels symmetrisch bezüglich des Stempels ändert, so dass dieser gleichförmig belastet wird. Insbesondere lässt sich durch eine derartige Ausgestaltung der Wandung ein Verkanten des Stempels vermeiden.

Eine Abdichtung des Stempels, so dass dieser hydraulisch bzw. pneumatisch belastbar ist, kann durch einen Dichtring erfolgen, der einen Spalt zwischen Stempel und Wandung über eine Dichtlippe dichtet. Eine derartige Dichtlippe ist in der Lage, auch einer veränderten Spaltbreite zu folgen und ermöglicht auf diese Weise eine variable Wirkfläche des Stempels.

Wird als Dichtring ein Dichtring mit einem U-förmigen Profil verwendet, so kann der erfindungsgemäß Stempel verhältnismäßig kostengünstig ausgestaltet werden, da hierfür ein Standardnutring Verwendung finden kann.

Die Kraftverteilung auf den Stempel bzw. die Dichtung erfolgt sehr gleichförmig, wenn der Dichtring mit U-förmigen Profil mit seinen Schenkeln jeweils an einer Wandung anliegt. Insbesondere bei einer derartigen Anwendung ist es von Vorteil, wenn die Wandungen, an welchen die Schenkel jeweils anliegen, gleichförmig variieren,- so dass auch die Kraftverhältnisse auf den Dichtring gleichförmig sind.

Bei der Verwendung eines derartigen Dichtrings braucht dieser lediglich auf einen Nachstellkolben des Stempel aufliegen, wodurch die Ausrückevorrichtung verhältnismäßig einfach baut.

Die Ausrückevorrichtung kann darüber hinaus Mittel zum Messen eines von dem Stempel zurückgelegten Weges umfassen. Hierdurch kann - unabhängig davon, auf welche Weise der Stempel betätigt wird - die in der Ausrückevorrichtung auftretende Kraft bestimmt werden. Diese kann beispielsweise als Maß für einen Kupplungsverschleiß oder ähnliches dienen. Auf diese Weise wird verhältnismäßig kostengünstig eine Möglichkeit geschaffen, indirekt eine Aussage über einen Kupplungsverschleiß zu treffen. Auf diese Weise kann ein rechtzeitiges Auswechseln der Kupplung gewährleistet werden.

Vorteilhafterweise sind Haltemittel vorgesehen, die verhindern, dass der Stempel wieder in sein Ausgangslage gelangt, wenn die Kraft vermindert wird. Hierdurch wird einerseits gewährleistet, dass trotz einer Kraftreduktion, wie sie regelmäßig bei derartigen Ausrückevorrichtungen auftritt, der Stempel in einer Position verbleibt, die der Maximalkraft entspricht. Insofern gibt der Stempel jederzeit an, wie eine Verschleißsituation der Kupplung oder ähnliches ist. Darüber hinaus gewährleisten derartige Haltemittel auch, dass eine Erhöhung der Energie im Energiespeicher dauerhaft erfolgen kann.

Die Haltemittel können insbesondere ein hydraulisches oder pneumatisches Rückschlagventil umfassen. Kumulativ oder alternativ hierzu kann auch eine Rasteinrichtung vorgesehen sein. Insbesondere kann eine derartige Rasteinrichtung Federzungen umfassen, die hinter einem, vorzugsweise mit dem Stempel bzw. einem Nachstellkolben wirkverbundenen, Anschlag einrasten.

Die Messmittel können einen binären Sensor, beispielsweise ein Piezoelement, umfassen, der an einer Endposition des Stempels vorgesehen ist. Diese Endposition ist derart gewählt, dass, wenn der Stempel sich in dieser Position befindet, der Verschleiß derart fortgeschritten ist, dass eine Anzeige notwendig wird. Der Sensor kann ein für eine derartige Anzeige notwendiges Signal ausgeben und auf diese Weise anzeigen, dass ein Handeln von Vorteil wäre.

Auch können die Messmittel ein Potentiometer oder ähnliches umfassen, welches mit dem Stempel wirkverbunden ist und dessen momentane Position anzeigt. Auf dieses Weise kann der Verschleiß bzw. die in der Ausrückevorrichtung auftretende Maximalkraft jederzeit erfasst werden.

Aus Gründen der Betriebssicherheit und um eine Überbelastung des Energiespeichers zu vermeiden, kann ein starrer Anschlag vorgesehen sein, gegen welchen der Stempel bei einer bestimmten Kraft aufläuft. Ab dieser Position erfolgt somit keine Energieerhöhung in dem Energiespeicher, so dass eine weitere Erhöhung der Gegenkraft in der Ausrückevorrichtung unmittelbar weitergegeben wird. Ab diesem Zeitpunkt kann also gespürt werden, wenn mehr Energie benötigt wird, um die Ausrückevorrichtung zu betätigen. Ansonsten dient, wie vorstehend beschrieben, der Energiespeicher eine möglichst genauen Kompensation dieser ansteigenden Kraft.

Es versteht sich, dass ein erfindungsgemäßer Energiespeicher bzw. eine erfindungsgemäße Messeinrichtung an beliebiger Stelle, unabhängig von den übrigen Merkmalen, in einem Antriebsstrang bis zu der auszurückenden Baugruppe und sogar an der auszurückenden Baugruppe selbst vorgesehen sein kann.

Umfasst der Energiespeicher ein Kuppelelement, welches ein Speicherelement des Energiespeichers mit einem Betätigungselement der Ausrückevorrichtung, insbesondere einem Ausrückekolben, wirkverbindet, so kann das Betätigungselement einen Winkelhebel umfassen. Eine derartige Anordnung zeichnet sich gegenüber einer verhältnismäßig raumsparenden Anordnung aus Schrägen und Führungsflächen, die gegenläufig angeordnet sind und Walzen in geeigneter Weise auf einen Ausrückekolben pressen, dadurch aus, dass bei gleichem Raumbedarf eine wesentlich zuverlässige Kraftsteuerung erfolgen kann. Insbesondere kann eine auftretende Hysterese verkleinert werden. Darüber hinaus ermöglicht ein derartiger Winkelhebel eine wesentlich genauere Justierung der Gesamtanordnung.

Es versteht sich, dass ein derartiger Winkelhebel auch unabhängig von den Mitteln zur Erhöhung der Energie im Energiespeicher in Abhängigkeit von der in der Ausrückevorrichtung auftretenden Kraft vorteilhaft Verwendung finden kann.

Insbesondere kann an dem Winkelhebel eine Walze vorgesehen sein, welche auf einer mit dem Betätigungselement verbundenen Kontur wälzt. Insofern ermöglicht diese Anordnung, dass auf weitere Walzen verzichtet werden kann, wodurch sich die Gesamtkosten reduzieren.

Darüber hinaus baut eine derartige Anordnung mit Winkelhebel verhältnismäßig klein, so dass die Walze ohneweiteres mittels eines Kugellagers an dem Winkelhebel gelagert sein kann. Hierdurch lässt sich die Anordnung wesentlich leichtgängiger ausgestalten, ohne dass zusätzlicher Bauraum geschaffen werden muss.

Ein vorteilhafter Kraftfluss lässt sich in der Gesamtanordnung ausbilden, wenn der Winkelhebel einen Walzenarm sowie einen Haltearm aufweist und über einen Angelpunkt mit dem Speicherelement wirkverbunden ist. Der Krafttluss zwischen Betätigungselement und Speicherelement kann dann über diesen Angelpunkt in verhältnismäßig solider Weise auf verhältnismäßig kleinem Bauraum realisiert werden.

Die Bewegung der Gesamtanordnung lässt sich verhältnismäßig leicht kontrollieren, wenn der Haltearm mit einer festgelegten Baugruppe des Speicherelements, vorzugsweise mit einem Zylinder, verbunden ist. Dieses ist insbesondere dann vorteilhaft, wenn der Zylinder auch die Gegenkräfte des Speicherelementes aufnimmt, so dass die Gesamtanordnung kraftfrei gestaltet werden kann. Durch eine derartige Anordnung ist es dann möglich, dass Gehäuse der Ausrückevorrichtung wesentlich leichter zu wählen, da dieses keine Kräfte mehr aufnehmen muss.

Vorteilhafterweise ist der Haltearm mit der festgelegten Baugruppe über ein, vorzugsweise flexibles, Halteelement wirkverbunden. Ein derartiges Halteelement erleichtert einerseits die Montage und kann andererseits wesentlich leichter und kleiner als die festgelegte Baugruppe selbst ausgebildet sein, da wesentlich geringere Kräfte auftreten. Wird das Haltelement flexibel gewählt, so kann der Winkelhebel wesentlich genauer einer Verlagerung, die durch das Speicherelement und durch die Betätigung der Ausrückevorrichtung bedingt ist, folgen.

Ist der Angelpunkt an einem weiteren Hebelarm des Winkelhebels angeordnet, so lässt sich der Punkt, an welchem die Wechselwirkung zwischen Winkelhebel und Speicherelement erfolgt, ohne weiteres an eine gewünschte Position verlagern. Insbesondere lassen sich auch aufgrund der Hebelanordnung die Kraftverhältnisse vorteilhaft an die konkrete Ausführungsform anpassen.

Eine Belastung auf den Winkelhebel lässt sich vermindern, wenn an dem Speicherelement ein Lager für den Hebelarm mit dem Angelpunkt vorgesehen ist, durch welches eine im wesentlichen parallel zu dem Hebelarm gerichtete Kraft von dem Speicherelement auf den Winkelhebel ausgeübt wird. Auf diese Weise lässt sich ein diesbezügliches Verbiegen des Winkelhebels vermindern, da die vom Speicherelement bei dem Ausrückevorgang aufgebrachten Kräfte keine Biegemomente auf den Hebelarm an sich aufbringen.

Insbesondere ist es vorteilhaft, wenn der Walzenarm und der Hebelarm mit dem Angelpunkt gradlinig zueinander angeordnet sind. Eine derartige Anordnung ist einerseits baulich einfach und somit kostengünstig. Andererseits ermöglicht eine derartige Anordnung in Verbindung mit dem vorbeschriebenen Lager, das die von dem Speicherelement aufgebrachten Kräfte auf das Betätigungselement ausgeübt werden können.

Weitere Vorteile, Ziele und Eigenschaften vorliegender Erfindung werden nachfolgend anhand der Beschreibung anliegender Zeichnung, in welcher drei Ausführungsbeispiele für eine erfindungsgemäße Ausrückevorrichtung dargestellt sind, beschrieben.

In der Zeichnung zeigen:
- Figur 1: eine erste, erfindungsgemäße Ausrückevorrichtung im Schnitt, wobei die obere Hälfte die Ausrückevorrichtung in unbetätigtem und die untere Hälfte die Ausrückevorrichtung in in verschlissenem und betätigtem Zustand zeigen;
- Figur 2: eine zweite, erfindungsgemäße Ausrückevorrichtung in ähnlicher Darstellung wie Figur 1
- Figur 3: eine dritte, erfindungsgemäße Ausrückevorrichtung in ähnlicher Darstellung wie Figuren 1 und 2,
- Figur 4: eine vierte, erfindungsgemäße Ausrückevorrichtung in ähnlicher Darstellung wie Figuren 1 bis 3 und
- Figur 5: die Ausrückevorrichtung nach Figur 4 im Schnitt entlang der Linie V-V in Figur 4.

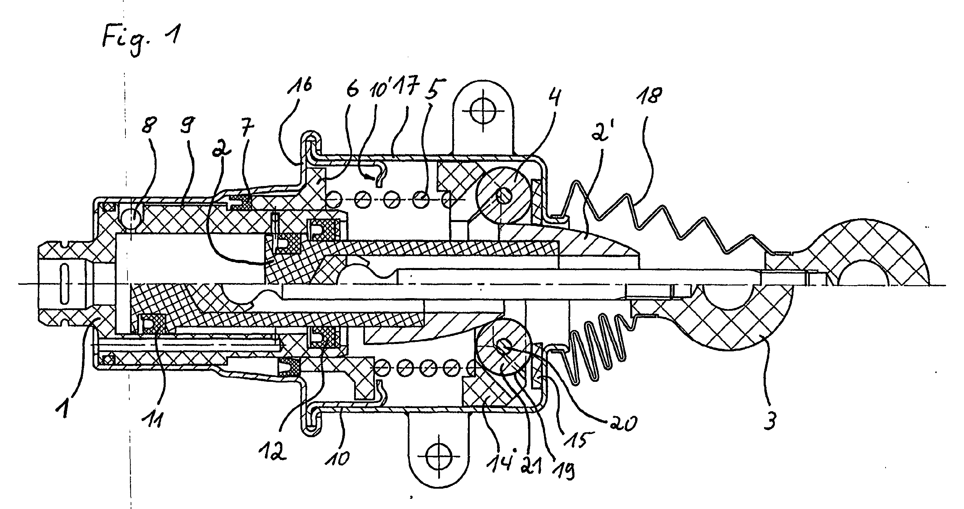

Die in den Figuren 1 bis 3 dargestellten Ausrückevorrichtungen umfassen einen Kupplungsgeber-Zylinder 1 einer hydraulischen Kupplungsbetätigung, in welchem ein Kolben 2 einen Ausrückdruck aufbauen kann. Der Kolben 2 wird durch eine Kupplungspedalstange 3 betätigt, die mit einem entsprechenden Kupplungspedal wirkverbunden ist. Der Zylinder 1 ist durch Dichtungen 11 und 12 abgedichtet und von einem Gehäuseteil 16 umgeben. Die Ausrückevorrichtung weist einen weiteren Gehäuseteil 17 auf, welcher mit dem Gehäuseteil 16 durch eine Bördelverbindung verbunden ist. Durch einen Faltenbalg 18, welcher zwischen dem Gehäuseteil und der Kupplungspedalstange 3 angeordnet ist, wird das Gehäuse 16, 17 zur Gänze verschlossen.

Der Kolben 2 weist an seinem pedalseitigen Ende eine Kontur 2' auf. Auf dieser Kontur 2' laufen Walzen 4, die durch Federn 5 vorgespannt sind. Zwischen den Federn 5 und den Walzen 4, welche als Kraftkoppler dienen, sind Mittel zur Kraftumlenkung vorgesehen. Diese umfassen einen Kraftumlenkungsring 14 mit einer Schräge sowie eine Scheibe 15 mit einer Führungsfläche. Durch die Federn 5, die Schräge sowie die Führungsfläche sind die Walzen 4 derart vorgespannt, dass sie nach radial innen auf die Kontur 2' eine Kraft ausüben. Wird das Kupplungspedal getreten, so können sich die Walzen 4 in Richtung auf die Kupplungspedalstange 3 verlagern. Hierdurch bewegt sich der Kraftumlenkungsring 14 entgegen der Betätigungsrichtung der Kupplungspedalstange 3. Bei diesem Vorgang entspannen sich die Federn 5 und geben eine entsprechende Arbeit an den Kolben 2 ab. Wird die Kupplung wieder eingerückt, schiebt eine Tellerfeder der Kupplung oder etwas ähnliches den Kolben 2 in seine Ausgangslage zurück, und die Feder 5 wird wieder gespannt.

Durch die Gestaltung der Kolbenkontur 2' oder der übrigen Baugruppen kann die gewünschte Verstärkung über den Pedalweg beliebig gestaltet werden.

Wie unmittelbar ersichtlich, sind die Schräge und die Kontur 2' im wesentlichen gegensinnig zueinander geführt.

Die Walzen 4 umfassen Rollen 21, die auf einer Achse 20 geführt sind. Hierbei stehen die Rollen 21 mit der Kontur 2' und die Achsen 20 mit der Schräge des Kraftumlenkungsringes 14 in Kontakt. Die Radien der Rollen 21 und der Achsen 20 sind entsprechend einem Neigungswinkel von 45° der Schräge in einem Verhältnis von 1:√2 gewählt, so dass eine annähernd schlupffreie Bewegung der Walzen 4 gewährleistet werden kann, selbst wenn die Achsen 20 und die Rollen 21 fest miteinander verbunden sind. Wegen des nichtlinearen Verlaufs der Kontur 2' ist eine vollständige Schluptvermeidung nicht möglich. Zur Verminderung von Reibungsverlusten sind aus diesem Grunde die Achsen 20 und die Rollen 21 nicht einstückig ausgeführt und zueinander drehbeweglich. Es versteht sich, dass, falls die Reibung ausreichend gering ist, auch eine einstückige Ausführungsform denkbar ist.

Um Reibungsverluste noch darüber hinausgehend zu vermindern, können auf der Achse 20 zwei Kunststoffscheiben 19, jeweils beidseits jeder Rolle 21, gelagert werden. Der Durchmesser dieser Kunststoffscheiben 19 ist ein wenig größer gewählt als der Durchmesser der Rollen 21. Auf diese Weise stützen sich die Kunststoffscheiben 19 an der Führungsfläche der Scheibe 15 ab, während jede der Rollen 21 durch die Scheibe 15 nicht behindert wird. Andererseits ist der Durchmesser der Kunststoffscheibe 19 so klein gewählt, dass diese in ihrer Rotation nicht durch die Kontur 2' behindert werden. Eine derartige Ausführung ist wegen des kreisförmigen Querschnitts der Kontur 2' möglich.

Um die Ausrückevorrichtung an Unterschiede zwischen einer neuen und einer verschlissenen Kupplung anzupassen, stützt sich die Feder 5 auf einen im wesentlichen ringförmigen Nachstellkolben 6 ab, der seinerseits mit einem Systemdruck der hydraulischen Kupplungsbetätigung aus dem Zylinder 1 beaufschlagt wird. Hierzu wird der Druck im Zylinder 1 abgenommen und über ein Rückschlagventil 8 und eine kalibrierte Drossel 9 dem Nachstellkolben 6 zugeführt.

Wenn die Kupplung verschleißt, steigen die für die Ausrückung erforderlichen Kräfte an, was zu einem proportionalen Anstieg des Betriebsdruckes führt. Da dieser Druck auf den Nachstellkolben 6 gegeben wird, steigt die Verspannung der Feder 5 proportional zum Systemdruck und damit zur Ausrückekraft an. Dieses bedeutet, dass die Kraftentlastung des Kupplungspedals über die Lebensdauer der Kupplung mit einem konstanten Faktor erfolgt. Da in dem System nur geringe Kräfte wirken, kann dieser Faktor hoch sein. Es muss lediglich sichergestellt werden, dass unter Berücksichtigung der Hysterese die Pedalkraft nie negativ wird und dass die gewünschte Kupplungscharakteristik erhalten bleibt.

Das Rückschlagventil 8 bewirkt, dass der Druck auf den Nachstellkolben 6 und damit die Vorspannung der Feder 5 auf ihrem Maximalwert erhalten bleibt. Die Drossel andererseits ermöglicht ein Auskuppeln auch dann, wenn nach längerer Standzeit der Druck über dem Nachstellkolben 6 verloren gegangen ist. Nach wenigen Kuppelvorgängen ist der notwendige Druck wieder aufgebaut.

Der Nachstellkolben 6 ist in einem Ringspalt zwischen dem Gehäuseteil 16 und dem Zylinder 1 verschiebbar gelagert. Verbleibende Spalte zwischen dem Nachstellkolben 6 und dem Gehäuseteil 16 bzw. dem Zylinder 1 sind durch einen Dichtring 7 mit einem U-förmigen Profil, der systemdruckseitig an dem Nachstellkolben 6 angeordnet ist, abgedichtet. Es sind auch andere Profilformen denkbar. Beispielsweise kann ein L-Profil bzw. ein Quadroprofil Verwendung finden. Hierbei liegt der Dichtring 7 mit seinen Schenkeln jeweils an einer Wandung des Ringspaltes zwischen Gehäuseteil 16 und Zylinder 1 an.

Die Abdichtung erfolgt somit über Dichtlippen, die in der Lage sind, sich einer variierenden Kontur anzupassen. Wie aus den Figuren ersichtlich, ist bei vorliegenden Ausführungsheispielen die radial außenliegende Wandung des Ringspaltes mit einer Kontur versehen. Wird der Nachstellkolben 6 in dem Ringspalt bewegt, so ändert sich dessen Querschnitt und die Dichtlippen des Dichtrings 7 folgen diesem entsprechend. Hierdurch wird über den Dichtring 7 und den Nachstellkolben 6 ein Stempel mit variabler Wirkfläche bereitgestellt.

Darüber hinaus ist in dem Grenzbereich zwischen den Gehäuseteilen 16 und 17 ein Haltering 10 mitverbördelt, der einen Anschlag 10' aufweist, welcher den maximalen Hub des Nachstellkolbens 6 begrenzt.

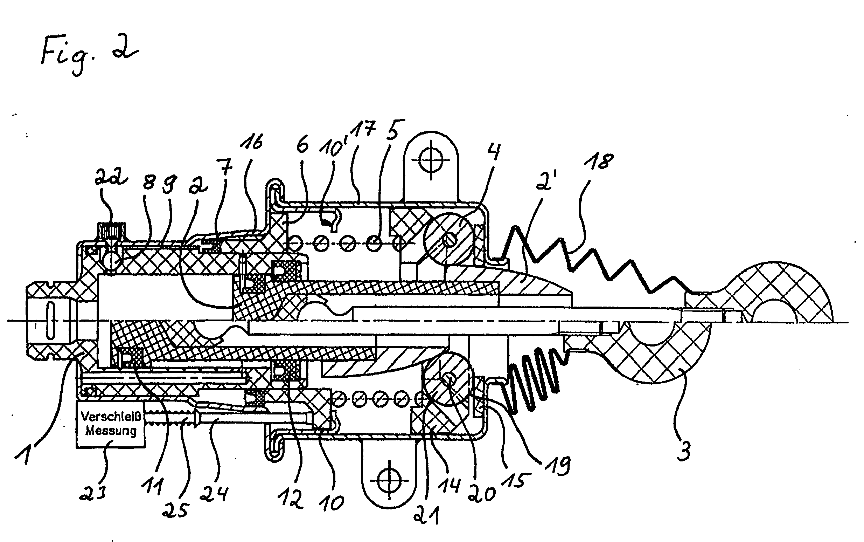

Die in Figur 2 dargestellte Ausführungsform umfasst darüber hinaus eine Entlüftung 22, die unmittelbar auf Höhe des Rückschlagventils 8 angeordnet ist. Diese Anordnung ermöglicht es einerseits, die Kugel des Rückschlagventils 8 auch im nachhinein auszutauschen bzw. einer Wartung zu unterziehen. Auch ist es möglich, zwischen der Entlüftungsschraube 22 und der Kugel 8 eine Feder vorzusehen, welche die Dichtungseigenschaften des Rückschlagventils 8 beeinflusst. Die Anordnung der Entlüftung 22 an dieser Stelle hat darüber hinaus den Vorteil, dass eine Entlüftung wesentlich schneller erfolgt, als wenn die Entlüftung hinter der Drossel 9 vorgesehen wäre.

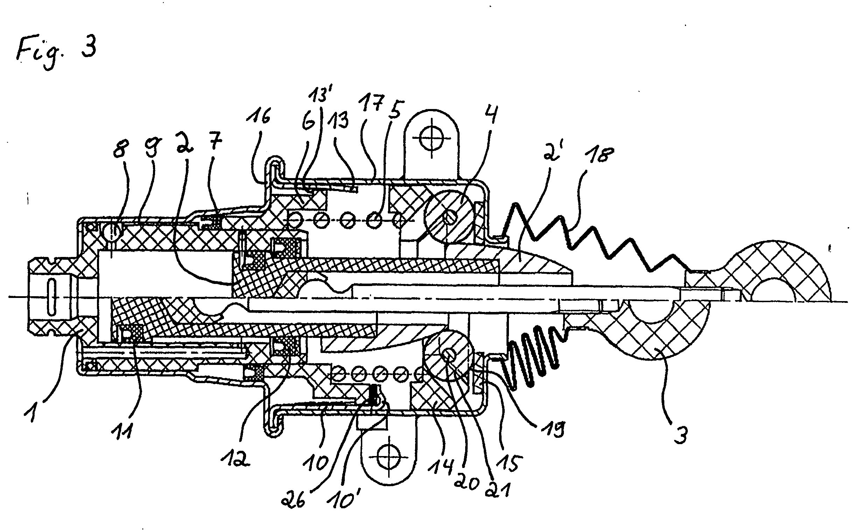

Um zu verhindern, dass der Nachstellkolben 6, insbesondere nach längerer Zeit, eine vorher bestimmte Position wieder verlässt und durch die Feder 5 in seine Ausgangsposition gelangt, ist bei dem in Figur 3 dargestellten Ausführungsbeispiel der Ring 10 mit Federzungen 13 versehen, die in vorher gewählten Positionen hinter Anschläge 13'an dem Nachstellkolben 6 einrasten.

Darüber hinaus sind die in Figuren 2 und 3 dargestellten Ausführungsbeispiele mit Mittels zum Messen des von dem Stempel bzw. von dem Dichtring 7 und dem Nachstellkolben 6 zurückgelegten Weges versehen. Bei der in Figur 2 dargestellten Ausführungsform ist dieses ein Potentiometer, das über eine Schubstange 24, die durch eine Feder 25 gegen den Nachstellkolben 6 gedrückt wird, mit dem Stempel wechselwirkt. Diese Anordnung ermöglicht es jederzeit die Lage des Stempels zu messen und somit eine Aussage über den Verschleiß zu treffen. Bei der in Figur 3 dargestellten Ausführungsform ist an dem Anschlag 10' ein Piezoelement 26 vorgesehen, welches anzeigt, dass der Nachstellkolben 6 den Anschlag 10' erreicht hat. Bei dieser Ausführungsform ist es somit möglich, anzuzeigen, wann ein maximaler Kupplungsverschleiß eingetreten ist, der durch die Ausrückevorrichtung noch kompensiert werden kann.

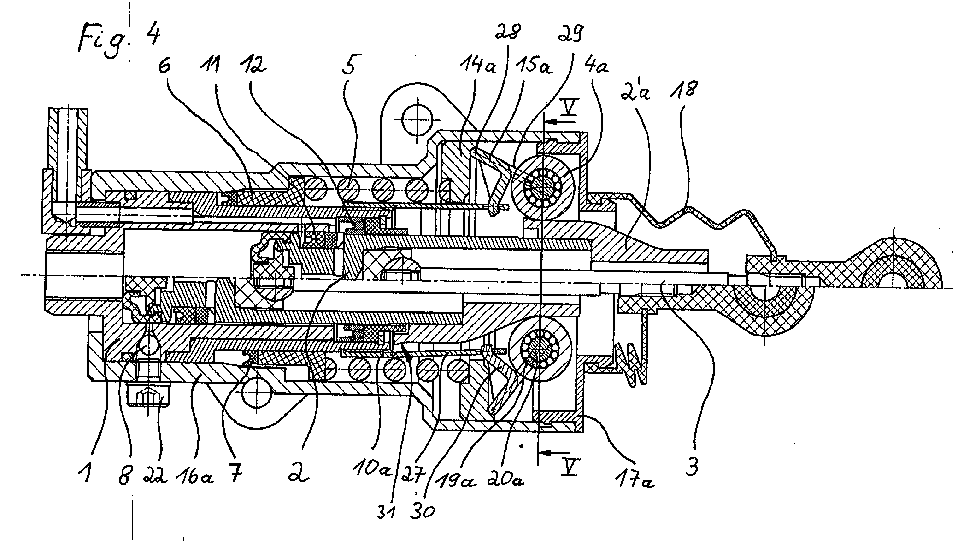

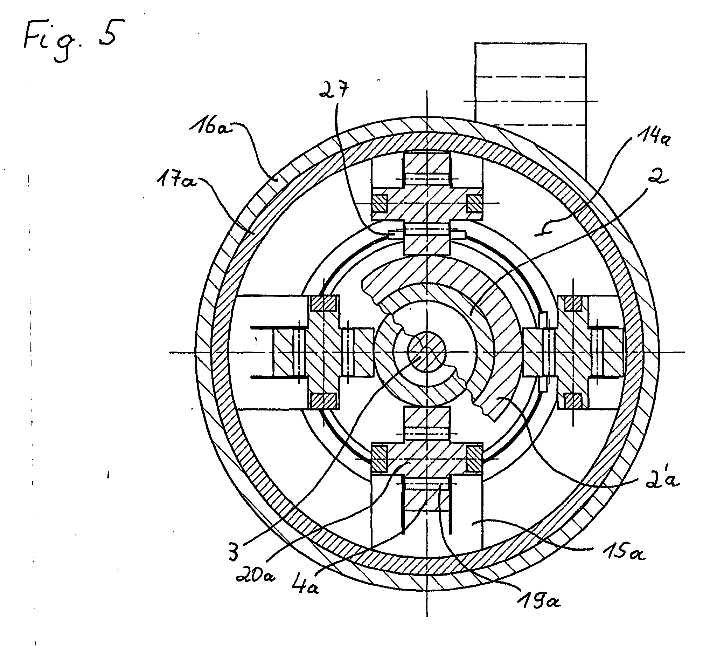

Die in Figuren 4 und 5 dargestellte Ausführungsform entspricht im wesentlichen der Figuren 1 bis 3 dargestellte Ausführungsform. Insofern sind identisch wirkende Baugruppen gleich beziffert. Im wesentlichen abweichende Baugruppen sind durch den Buchstaben "a" gekennzeichnet.

Bei der in Figuren 4 und 5 dargestellten Ausführungsform erfolgt die Kopplung zwischen dem die Feder 5 umfassenden Speicherelement 5 und dem Ausrückekolben 2 durch ein Betätigungselement, welches einen Winkelhebel 15a umfasst. An dem Winkelhebel 15a ist eine Walze 4a vorgesehen, welche auf der Kontur 2'a wälzt. Diese Walze ist mittels eines Kugellagers 19a auf einer mit dem Winkelhebel 15a verbundenen Achse 20a gelagert.

Hierbei ist die Achse 20a an einem Walzenarm 29 des Winkelhebels 15a gelagert. Darüber hinaus weist der Winkelhebel 15a einen Haltearm 30 auf, der in eine als Halteelement dienende Zugstange 27 eingreift. Diese Zugstange 27 ist mittels eines Halteringes 10a, der in einem Zylinder für den Stempel 7 eingreift, fixiert. Wie aus den Figuren 4 und 5 ersichtlich, kann der Zugarm 27 einer Bewegung des Winkelhebels 15a durch Neigen folgen.

Darüber hinaus umfasst der Winkelhebel 15a einen weiteren Hebelarm, an welchem ein Angelpunkt 28 vorgesehen ist. Dieser greift in ein entsprechendes Lager an einem Ausrückekolben 14a, welcher durch die Feder 5 mit einer Kraft beaufschlagt wird, ein. Das Lager ist hierbei derart der Oberfläche des Hebelarms an dem Angelpunkt 28 angepasst, dass eine nahezu senkrechte Kraft entlang des Hebelarms auf den Winkelhebel 15a ausgeübt wird.

Wie unmittelbar ersichtlich, sind der Walzenarm 29 und der Hebelarm mit dem Angelpunkt 28 linear zueinander angeordnet, so dass die Kräfte unmittelbar bis zu der Walze 4a gelangen.

Der Winkelhebel 15a kann als Blechpressteil hergestellt werden.

Wie insbesondere aus Figur 4 ersichtlich, ist diese Anordnung aus Feder 5, Stempel 6 sowie dem dazugehörigen Innenzylinder mit dem Zugarm 7 und 20, dem Winkelhebel 15a und dem Stempel 14a nach außen hin nahezu kraftfrei. Eine derartige Anordnung ermöglicht es somit, das Gehäuse 16a verhältnismäßig leicht auszubilden. Insbesondere übernimmt der Gehäusedeckel 17a keinerlei kraftübertragende Funktion, so dass dieser gegenüber den in Figuren 1 bis 3 dargestellten Ausführungsformen äußerst leicht und kostengünstig bereitgestellt werden kann.

Wie aus Figur 4 ersichtlich, weist die Kontur 2'a an ihrer dem Kolben 2 zugewandten Seite eine Auflaufschräge 31 auf, die als Montagehilfe dient.

## Patentansprüche

1. Ausrückevorrichtung, insbesondere für eine Kupplung, mit einem Energiespeicher, der beim Ausrücken Energie abgibt und bei einem gegenläufigen Vorgang Energie speichert, und mit Mitteln zur Erhöhung der Energie im Energiespeicher in Abhängigkeit von einer in der Ausrückevorrichtung auftretenden Kraft, die einen hydraulisch oder pneumatisch betätigbaren Stempel (6, 7) mit variabler Wirkfläche umfassen, ***dadurch gekennzeichnet, dass*** der Stempel (6, 7) gegen eine Führungsfläche (16, 16a) abgedichtet ist, deren Oberfläche eine vom Stempel (6, 7) wegweisende bzw. auf diesen hinweisende Richtungskomponente aufweist, wobei durch die Dichtung bedingt die Größe der Wirkfläche variabel ist.

2. Ausrückevorrichtung nach Anspruch 1, ***dadurch gekennzeichnet, dass*** der Stempel (6, 7) durch eine Ausrückehydraulik oder -pneumatik, die durch die Ausrückevorrichtung angeregt wird, betätigbar ist.

3. Ausrückevorrichtung nach Anspruch 1 oder 2, ***dadurch gekennzeichnet, dass*** je nach Position des Stempels entlang seines Weges die Führungsfläche näher am Stempel bzw. weiter von diesem entfernt ist.

4. Ausrückevorrichtung nach einem der Ansprüche 1 bis 3, ***dadurch gekennzeichnet, dass*** der Stempel (6, 7) in einem Raum geführt ist, dessen Querschnitt entlang des Stempelweges variiert.

5. Ausrückevorrichtung nach einem der Ansprüche 1 bis 4, ***dadurch gekennzeichnet, dass*** der Stempel (6, 7) in einem Ringspalt angeordnet ist, dessen radial innenliegende Wandung und/oder dessen radial außenliegende Wandung entlang des Stempels variiert.

6. Ausrückevorrichtung nach einem Ansprüche 1 bis 5, ***gekennzeichnet durch*** einen Dichtring (7), der einen Spalt zwischen Stempel (6, 7) und einer Wandung (1, 16, 16a) über eine Dichtlippe dichtet.

7. Ausrückevorrichtung nach Anspruch 6, ***dadurch gekennzeichnet, dass*** der Dichtring (7) ein U-förmiges Profil aufweist.

8. Ausrückevorrichtung nach Anspruch 7, ***dadurch gekennzeichnet, dass*** der Dichtring (7) mit seinen Schenkeln jeweils an einer Wandung (1, 16, 16a) anliegt.

9. Ausrückevorrichtung nach einem der Ansprüche 6 bis 8, ***dadurch gekennzeichnet, dass*** der Dichtring (7) auf einer Druckseite eines Nachstellkolbens (6) aufliegt.

10. Ausrückevorrichtung nach einem Ansprüche 1 bis 9, ***gekennzeichnet durch*** Mittel zum Messen eines von dem Stempel (6, 7) zurückgelegten Weges.

11. Ausrückevorrichtung nach Anspruch 10, ***dadurch gekennzeichnet, dass*** die Messmittel einen binären Sensor umfassen, der an einer Endposition (10') des Stempels (6, 7) vorgesehen ist.

12. Ausrückevorrichtung nach Anspruch 11, ***dadurch gekennzeichnet, dass*** der binäre Sensor ein Piezoelement (26) umfasst.

13. Ausrückevorrichtung nach einem der Ansprüche 10 bis 12, ***dadurch gekennzeichnet, dass*** die Messmittel ein Potentiometer (23) umfassen, welches mit dem Stempel (6, 7) wirkverbunden ist.

14. Ausrückevorrichtung nach einem der Ansprüche 1 bis 13, ***gekennzeichnet durch*** Haltemittel (8, 13, 13'), die verhindern, dass der Stempel (6, 7) wieder in eine Ausgangslage gelangt, wenn die Kraft vermindert wird.

15. Ausrückevorrichtung nach Anspruch 14, ***dadurch gekennzeichnet, dass*** die Haltemittel (8, 13, 13') ein hydraulisches oder pneumatisches Rückschlagventil (8) umfassen.

16. Ausrückevorrichtung nach Anspruch 14 oder 15, ***dadurch gekennzeichnet, dass*** die Haltemittel (8, 13, 13') eine Rasteinrichtung (13, 13') umfassen.

17. Ausrückevorrichtung nach Anspruch 16*, **dadurch gekennzeichnet, dass*** die Haltemittel (8, 13, 13') zumindest eine Federzunge (13) umfassen, die hinter einem Anschlag (13') einrasten kann.

18. Ausrückevorrichtung nach einem dei. Ansprüche 1 bis 17, ***gekennzeichnet durch*** eine starren Anschlag (10'), gegen welchen der Stempel (6, 7) bei einer bestimmten Kraft aufläuft.

19. Ausrückevorrichtung nach einem der vorhergehenden Ansprüche, ***dadurch gekennzeichnet, dass*** der Energiespeicher ein Koppelelement aufweist, welches ein Speicherelement (5) des Energiespeichers mit einem Betätigungselement der Ausrückevorrichtung, insbesondere einem Ausrückekolben (2) wirkverbindet, wobei das Betätigungselement einen Winkelhebel (15a) umfasst.

20. Ausrückevorrichtung nach Anspruch 19, ***dadurch gekennzeichnet, dass*** der Winkelhebel (15a) einen Walzenarm (29) sowie einen Haltearm (30) aufweist und über einen Angelpunkt (28) mit dem Speicherelement (5) wirk verbunden ist.

21. Ausrückevorrichtung nach Anspruch 20, ***dadurch gekennzeichnet, dass*** der Haltearm (30) mit einer festgelegten Baugruppe des Speicherelements (5), vorzugsweise mit einem Zylinder, verbunden ist.

22. Ausrückevorrichtung nach Anspruch 21, ***dadurch gekennzeichnet, dass*** der Haltearm (30) mit der festgelegten Baugruppe über ein, vorzugsweise flexibles, Halteelement (27) wirkverbunden ist.

23. Ausrückevorrichtung nach einem der Ansprüche 20 bis 22, ***dadurch gekennzeichnet, dass*** der Angelpunkt (28) an einem weiteren Hebelarm des Winkelhebels (15a) angeordnet ist.

24. Ausrückevorrichtung nach Anspruch 23, ***dadurch gekennzeichnet, dass*** an dem Speicherelement ein Lager für den Hebelarm mit dem Angelpunkt (28) vorgesehen ist, durch welches eine im wesentlichen parallel zu dem Hebelarm gerichtete Kraft von dem Speicherelement (5) auf den Winkelhebel (15a) ausgeübt wird.

25. Ausrückevorrichtung nach einem der Ansprüche 20 bis 24, ***dadurch gekennzeichnet, dass*** der Walzenarm (29) und der Hebelarm mit dem Angelpunkt (28) gradlinig zueinander angeordnet sind.

26. Ausrückevorrichtung nach einem der Ansprüche 19 bis 25, ***dadurch gekennzeichnet, dass*** an dem Winkelhebel (15a) eine Walze (4a) vorgesehen ist, welche auf einer mit dem Betätigungselement (2) verbundenen Kontur (2'a) wälzt.

27. Ausrückevorrichtung nach Anspruch 26, ***dadurch gekennzeichnet, dass*** die Walze (4a) mittels eines Kugellagers (19a) an dem Winkelhebel (15a) gelagert ist.

## Claims

1. A disengaging device, more specifically for a clutch, having an energy storage device that releases energy while disengaging and that stores energy during an inverse process and having means to increase the energy in the energy storage device depending on a force appearing in the disengaging device that include a piston (6, 7) having a variable active surface that is adapted to be operated hydraulically or pneumatically, ***characterized in that*** the piston (6, 7) is sealed against a guiding surface (16, 16a), the surface of which comprises a direction component showing away from or towards the piston (6, 7), the size of the active surface being variable due to the seal.

2. The disengaging device according to claim 1, ***characterized in that*** the stamp (6, 7) is adapted to be operated via a disengaging hydraulic or pneumatic that is stimulated by the disengaging device.

3. The disengaging device according to claim 1 or 2, ***characterized in that*** the guiding surface is closer to or further away from the piston according to the position of the piston along its path.

4. The disengaging device according to one of the claims 1 to 3, ***characterized in that** the* piston (6, 7) is guided in a chamber, the cross-section of which varies along the path of the piston.

5. The disengaging device according to one of the claims 1 to 4, ***characterized in that** the* piston (6, 7) is disposed in an annular gap, the radially inner wall and/or the radially outer wall of which varies along the piston.

6. The disengaging device according to one of the claims 1 to 5, ***characterized by*** a sealing ring (7) that seals off a gap between the piston (6, 7) and a wall (1, 16, 16a) via a sealing lip.

7. The disengaging device according to claim 6, ***characterized in that*** the sealing ring (7) comprises a U-shaped profile.

8. The disengaging device according to claim 7, ***characterized in that*** the sealing ring (7) fits with its legs against respectively one wall (1, 16, 16a).

9. The disengaging device according to one of the claims 6 to 8, ***characterized in that*** the sealing ring (7) rests on a pressure side of an adjusting piston (6).

10. The disengaging device according to one of the claims 1 to 9, ***characterized by*** means for measuring the path travelled by the piston (6, 7).

11. The disengaging device according to claim 10, ***characterized in that*** the measuring means include a binary sensor that is provided at an extreme position (10') of the piston (6, 7).

12. The disengaging device according to claim 11, ***characterized in that*** the binary sensor includes a piezoelement (26).

13. The disengaging device according to one of the claims 1 to 12, ***characterized in that*** the measuring means include a potentiometer (23) that is work-connected to the piston (6, 7).

14. The disengaging device according to one of the claims 1 to 13, ***characterized by*** holding means (8, 13, 13') that prevent the piston (6, 7) from returning to its initial position when the force is reduced.

15. The disengaging device according to claim 14, ***characterized in that*** the holding means (8, 13, 13') include a hydraulic or pneumatic check valve (8).

16. The disengaging device according to one of the claims 14 or 15, ***characterized in that*** the holding means (8, 13, 13') include a detent mechanism (13, 13').

17. The disengaging device according to claim 16, ***characterized in that*** the holding means (8, 13, 13') include at least one spring blade (13) that can snap-fit behind a limit stop (13').

18. The disengaging device according to one of the claims 1 to 17, ***characterized by*** a rigid limit-stop (10') on which the piston (6, 7) comes to bear at a certain force.

19. The disengaging device according to one of the afore-mentioned claims, ***characterized in that*** the energy storage device comprises a coupling element which work-connects a storage element (5) of the energy storage device with an actuating element of the disengaging device, more specifically with a disengaging piston (2), the actuating element including a bell-crank lever (15a).

20. The disengaging device according to claim 19, ***characterized in that*** the bell-crank lever (15a) comprises a roller arm (29) as well as a holding arm (30) and is work-connected to the storage element (5) via a pivotal point (28).

21. The disengaging device according to claim 20, ***characterized in that*** the holding arm (30) is connected with a determined subassembly of the storage element (5), preferably with a cylinder.

22. The disengaging device according to claim 21, ***characterized in that*** the holding arm (30) is work-connected to the determined subassembly via a preferably flexible holding element (27).

23. The disengaging device according to one of the claims 20 to 22, ***characterized in that*** the pivotal point (28) is disposed on another lever arm of the bell-crank lever (15a).

24. The disengaging device according to claim 23, ***characterized in that*** a bearing for the lever arm with the pivotal point (28) is provided on the storage element, through which bearing a force directed substantially parallel to the lever arm is exerted onto the bell-crank lever (15a) by the storage element (5).

25. The disengaging device according to one of the claims 20 to 24, ***characterized in that*** the roller arm (29) and the lever arm with the pivotal point (28) are disposed in a straight line relative to each other.

26. The disengaging device according to one of the claims 19 to 25, ***characterized in that*** a roll (4a) which is rolling on a contour (2'a) connected to the actuating element (2) is provided on the bell-crank lever (15a).

27. The disengaging device according to claim 26, ***characterized in that*** the roll (4a) is born by means of a roller bearing (19a) on the bell-crank lever (15a).

## Revendications

1. Dispositif de débrayage, notamment pour un embrayage, avec un accumulateur d'énergie qui libère de l'énergie lors du débrayage et qui accumule de l'énergie lors d'un processus contraire et avec des moyens comprenant un piston (6, 7) ayant une surface effective variable et susceptible d'être actionné hydrauliquement ou pneumatiquement pour augmenter l'énergie dans l'accumulateur en fonction d'une force apparaissant dans le dispositif de débrayage, ***caractérisé en ce que*** le piston (6, 7) est isolé hermétiquement par rapport à une surface de guidage (16, 16a) dont la surface comporte une composante directionnelle détournée ou tournée vers le piston (6, 7), la taille de la surface effective étant variable à cause du joint.

2. Dispositif de débrayage selon la revendication 1, ***caractérisé en ce que*** le piston (6, 7) est susceptible d'être actionné par l'intermédiaire d'un débrayeur hydraulique ou pneumatique activé par le dispositif de débrayage.

3. Dispositif de débrayage selon la revendication 1 ou 2, ***caractérisé en ce que*** selon la position du piston le long de sa trajectoire, la surface de guidage est plus proche ou plus éloignée du piston.

4. Dispositif de débrayage selon l'une quelconque des revendications 1 à 3, ***caractérisé en ce que*** le piston (6, 7) est guidé dans un espace dont la section varie le long de la trajectoire du piston.

5. Dispositif de débrayage selon l'une quelconque des revendications 1 à 4, ***caractérisé en ce que*** le piston (6, 7) est disposé dans une fente annulaire dont la paroi située radialement à l'intérieur et/ou la paroi située radialement à l'extérieur varie le long du piston.

6. Dispositif de débrayage selon l'une quelconque des revendications 1 à 5, ***caractérisé par*** un anneau d'étanchéité (7) qui étanche une fente entre le piston (6, 7) et une paroi (1, 16, 16a) par l'intermédiaire d'une lèvre d'étanchéité.

7. Dispositif de débrayage selon la revendication 6, ***caractérisé en ce que*** l'anneau d'étanchéité (7) comporte un profil conformé en U.

8. Dispositif de débrayage selon la revendication 7, ***caractérisé en ce que*** les côtés de l'anneau d'étanchéité (7) viennent prendre appui sur respectivement une paroi (16, 16a).

9. Dispositif de débrayage selon l'une quelconque des revendications 6 à 8, ***caractérisé en ce que*** l'anneau d'étanchéité (7) repose sur une zone de pression d'un piston d'ajustement (6).

10. Dispositif de débrayage selon l'une quelconque des revendications 1 à 9, ***caractérisé par*** des moyens destinés à mesurer la trajectoire couverte par le piston (6, 7).

11. Dispositif de débrayage selon la revendication 10, ***caractérisé en ce que*** les moyens de mesure comprennent un capteur binaire prévu au niveau d'une positon finale (10') du piston (6, 7).

12. Dispositif de débrayage selon la revendication 11, ***caractérisé en ce que*** le capteur binaire comprend un élément piézoélectrique (26).

13. Dispositif de débrayage selon l'une quelconque des revendications 10 à 12, ***caractérisé en ce que*** les moyens de mesure comprennent un potentiomètre (23) agissant conjointement avec le piston (6, 7).

14. Dispositif de débrayage selon l'une quelconque des revendications 10 à 12, ***caractérisé par*** des moyens de retenue (8, 13, 13') qui empêchent le piston (6, 7) de revenir à sa position de départ lorsque la force est réduite.

15. Dispositif de débrayage selon la revendication 14, ***caractérisé en ce que*** les moyens de retenue (8, 13, 13') comprennent une soupape de retenue (8) hydraulique ou pneumatique.

16. Dispositif de débrayage selon la revendication 14 ou 15, ***caractérisé en ce que*** les moyens de retenue (8, 13, 13') comprennent un organe d'encliquetage (13, 13').

17. Dispositif de débrayage selon la revendication 16, ***caractérisé en ce que*** les moyens de retenue (8, 13, 13') comprennent au moins une languette flexible (13) qui peut s'enclencher sur une butée (13').

18. Dispositif de débrayage selon l'une quelconque des revendications 1 à 17, ***caractérisé par*** une butée rigide (10') contre laquelle le piston (6, 7) vient heurter lors d'une certaine force.

19. Dispositif de débrayage selon l'une quelconque des revendications précédentes, ***caractérisé en ce que*** l'accumulateur d'énergie comporte un élément de couplage lequel relie de manière fonctionnelle un élément d'accumulation (5) de l'accumulateur d'énergie avec un élément d'actionnement du dispositif de débrayage, notamment un piston de débrayage (2), l'élément d'actionnement comprenant un levier coudé (15a).

20. Dispositif de débrayage selon la revendication 19, ***caractérisé en ce que*** le levier coudé (15a) comporte un bras de rouleau (29) ainsi qu'un bras de maintien (30) et agit conjointement avec l'élément d'accumulation (5) par l'intermédiaire d'un point charnière (28).

21. Dispositif de débrayage selon la revendication 20, ***caractérisé en ce que*** le bras de maintien (30) est relié avec un sous-ensemble déterminé de l'élément d'accumulation (5), de préférence avec un cylindre.

22. Dispositif de débrayage selon la revendication 21, ***caractérisé en ce que*** le bras de maintien (30) agit conjointement avec un le sous-ensemble déterminé par l'intermédiaire d'un élément de maintien (27) de préférence flexible.

23. Dispositif de débrayage selon l'une quelconque des revendications 20 à 22, ***caractérisé en ce que*** le point charnière (28) est disposé sur un autre bras de levier du levier coudé (15a).

24. Dispositif de débrayage selon la revendication 23, ***caractérisé en ce qu'**un* palier pour le bras de levier avec le point charnière (28) est prévu sur l'élément d'accumulation, une force essentiellement parallèle au bras de levier s'exerçant à partir de l'élément d'accumulation (5) par l'intermédiaire dudit palier sur le levier coudé (15a).

25. Dispositif de débrayage selon l'une quelconque des revendications 20 à 24, ***caractérisé en ce que*** le bras de rouleau (29) et le bras de levier avec le point charnière (28) sont disposés de manière rectiligne l'un par rapport à l'autre

26. Dispositif de débrayage selon l'une quelconque des revendications 19 à 25, ***caractérisé en ce qu'**un* rouleau (4a) roulant sur un contour (2'a) relié à l'élément d'actionnement (2) est prévu sur le levier coudé (15a).

27. Dispositif de débrayage selon la revendication 26, ***caractérisé en ce que*** le rouleau (4a) est montée sur le levier coudé (15a) par l'intermédiaire d'un roulement à billes (19a).
